# EUROPÄISCHE PATENTSCHRIFT

(11) **EP 0 956 491 B1**
(45) Veröffentlichungstag und Bekanntmachung des Hinweises auf die Patenterteilung: **09.01.2002**
(21) Anmeldenummer: 98905323.6
(22) Anmeldetag: 20.01.1998
(51) Int. Cl.: G01F 3/10, G01F 25/00, B67D 5/20

(54) **VORRICHTUNG ZUR VOLUMENMESSUNG STRÖMENDER MEDIEN SOWIE ENTSPRECHENDES VERFAHREN**
DEVICE FOR MEASURING THE VOLUME OF FLOWING SUBSTANCE AND CORRESPONDING METHOD
DISPOSITIF PERMETTANT DE MESURER LE VOLUME DE SUBSTANCES EN ECOULEMENT ET PROCEDE CORRESPONDANT

(30) Priorität: 29.01.1997 DE 19703243
(43) Veröffentlichungstag der Anmeldung: 17.11.1999
(73) Patentinhaber: Tokheim Corporation, Fort Wayne Indiana 46803-0360 (US); Tokheim Gmbh, 82362 Weilheim (DE)
(72) Erfinder: BLOSS, Hans, Ulrich, D-90455 Nürnberg (DE)
(74) Vertreter: Grünecker, Kinkeldey, Stockmair & Schwanhäusser Anwaltssozietät
(86) Internationale Anmeldenummer: EP9800296
(87) Internationale Veröffentlichungsnummer: WO9833042

(56) Entgegenhaltungen:
- EP-A- 0 326 380
- WO-A-93/12405
- DE-A- 4 423 461
- US-A- 5 574 229

## Beschreibung

Die vorliegende Erfindung betrifft eine Vorrichtung zur Volumenmessung strömender Medien sowie ein entsprechendes Verfahren und betrifft insbesondere eine Vorrichtung zur Kraftstoffvolumenmessung in Zapfsäulen von Kraftfahrzeug-Tankanlagen.

Eine bekannte Vorrichtungsart für eine derartige Volumenmessung weist ein Gehäuse mit mindestens zwei sich teilweise durchdringenden Längsbohrungen mit zueinander parallelen Achsen auf, in welchen mehrgängige, ineinandergreifende Schraubenspindein frei drehbar gelagert sind und weist weiterhin mindestens einen Sensor auf, durch den die Anzahl der Umdrehungen zumindest einer der Spindeln detektiert wird. Beispiele derartiger Vorrichtungen sind aus EP 0 572 621 B1, DE 195 13 781 A1, DE 44 23 461 sowie DE 42 08 869 A1 bekannt.

Ein Problem im Zusammenhang mit Schraubenspindel-Volumetern besteht darin, daß sich, ausgehend von der durch den Sensor während eines Tankvorgangs detektierte Umdrehungszahl der Spindel, nicht in exakter Weise auf das tatsächlich getankte Kraftstoffvolumen zurückschließen läßt. Dies liegt insbesondere daran, daß bei anlaufender bzw. nachlassender Strömung zu Beginn bzw. am Ende eines Tankvorgangs mehr Kraftstoff durch das Volumeter fließt, als tatsächlich anhand der entsprechenden Anzahl von Spindelumdrehungen durch den Sensor detektiert wird. Ursächlich für dieses Verhalten ist ein herstellungsbedingt nicht vermeidbarer Spalt zwischen den Spindeln und den Wänden der Längsbohrungen, so daß Teile des getankten Kraftstoffvolumens das Volumeter durchdringen können, ohne eine diesen Volumenteilen entsprechende Spindeldrehung hervorzurufen.

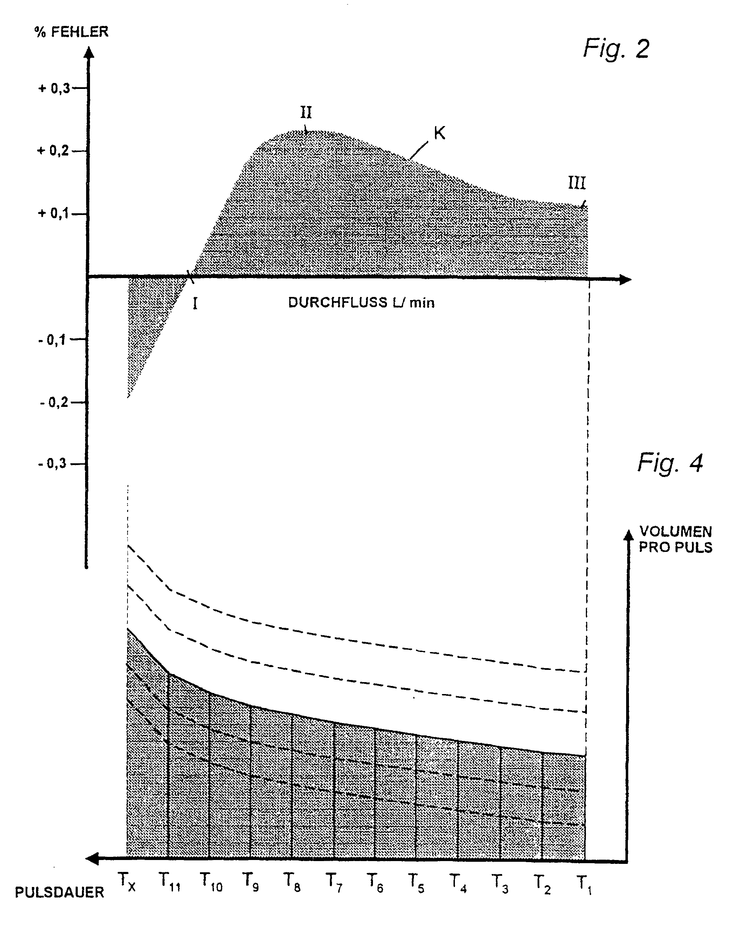

Anhand der Fig. 2 ist der sich dadurch einstellende Effekt für die Genauigkeit der Volumenmessung graphisch dargestellt.

Über der Abszisse des dargestellten Diagramms ist die durch das Volumeter strömende Kraftstoffmenge in der Einheit l/min dargestellt. Entlang der Ordinate ist der prozentuale Fehler aufgetragen, der sich aufgrund der Abweichung der tatsächlich getankten Kraftstoffmenge von der gemessenen Kraftstoffmenge ergibt. Beim Nulldurchgang der Kurve K (Punkt I) ist ein Zustand erreicht, bei dem das gemessene Kraftstoffvolumen dem tatsächlich getankten Kraftstoffvolumen entspricht. Zu Beginn des Tankvorgangs, d.h. in einem Bereich links von dem Null-Durchgang (Punkt I), ergibt sich ein negativer Fehler, durch den ausgedrückt wird, wie groß der Anteil des getankten Kraftstoffes war, der zwar durch das Volumeter geflossen ist, jedoch von dem Sensor nicht detektiert werden konnte. Bei sehr hohen Strömungsgeschwindigkeiten, d.h. beispielsweise ab dem Punkt III, erfolgt die Messung mit einem etwa gleichbleibend geringen positiven Fehler, d.h. es wird nur unwesentlich mehr Kraftstoff gemessen, als tatsächlich durch das Volumeter geströmt ist. Zwischen den Punkten I und III ist eine Erhöhung des positiven Fehlers festzustellen, wobei am Punkt II die pro getankter Volumeneinheit zu viel angezeigte Menge am größten ist.

Um dieser Situation gerecht zu werden, ist in der EP 0 572 621 B1 vorgeschlagen worden, die vom Sensor gelieferten Pulse in Abhängigkeit der Strömungsgeschwindigkeit des Kraftstoffes, d.h. in Abhängigkeit des Ortes auf der Abszisse der Fig. 2, während des Tankvorgangs innerhalb einer Impulsformerstufe in ihrer Frequenz zu verändern, um dadurch eine Linearisierung zu erreichen, noch bevor die Impulse zu dem eigentlichen Zählwerk gelangen, durch das ein Gesamtzählerstand ermittelt wird, der über eine feststehende Relation in ein getanktes (gemessenes) Kraftstoffvolumen umgerechnet wird. Gemäß der Lehre der EP 0 572 621 B1 werden somit weiterhin von dem Sensor gelieferte Pulse gezählt, auch wenn diese Pulse auf ihrem Weg zum Zählwerk hin innerhalb der Impulsformerstufe verändert werden, um die angesprochene Linearisierung zu erreichen.

Aus US 5 574 229 A ist eine Vorrichtung zur Volumenmessung von strömendem Wasser bekannt, das Unproportionalitäten zwischen tatsächlich geförderter Menge und Rotorfrequenz korrigiert. Gemäß dem vorgeschlagenen Korrekturverfahren werden Rotorpulse detektiert und zum einen durch die Anzahl der Pulse pro Rotorumdrehung geteilt, um ein tatsächliches Maß für die vollen Umdrehungen des Rotors zu erhalten und zum anderen durch einen Faktor D geteilt, durch den sichergestellt wird, daß am Ausgang nur dann ein Zählimpuls erzeugt wird, wenn wieder eine bestimmte Wassermenge das Volumeter passiert hat.

Ausgehend von dem bekannten Stand der Technik ist es die Aufgabe der vorliegenden Erfindung, eine Vorrichtung zur Volumenmessung von Kraftstoff sowie ein entsprechendes Verfahren anzugeben, mit denen eine genaue Volumenmessung in einfacher Weise erreicht werden kann.

Diese Aufgabe wird in erfindungsgemäßer Weise durch die Gegenstände der Patentansprüche 1 und 15 gelöst. Bevorzugte Ausführungsformen der vorliegenden Erfindung sind Gegenstand der Unteransprüche.

Im folgenden werden bevorzugte Ausführungsformen der vorliegenden Erfindung unter Bezugnahme auf die beiliegenden Zeichnungen näher erläutert. Dabei zeigen die Zeichnungen im einzelnen:
Fig. 1 einen Längsschnitt durch eine bevorzugte Ausführungsform des mechanischen Teils der erfindungsgemäßen Vorrichtung;
Fig. 2 ein Diagramm zur Erläuterung des bei Spindelvolumetern auftretenden Fehlers;
Fig. 3 Zeitdiagramme zur Erläuterung eines bevorzugten Meßverfahrens;
Fig. 4 ein weiteres Diagramm zur Erläuterung des Prinzips des erfindungsgemäßen Meßverfahrens;
Fig. 5 ein Prinzipblockschaltbild einer Schaltung zur Durchführung des Meßverfahrens; und
Fig. 6 einen Längsschnitt durch eine Ausführungsform des erfindungsgemäßen Volumeters zur Erläuterung weiterer erfindungsgemäßer Merkmale.

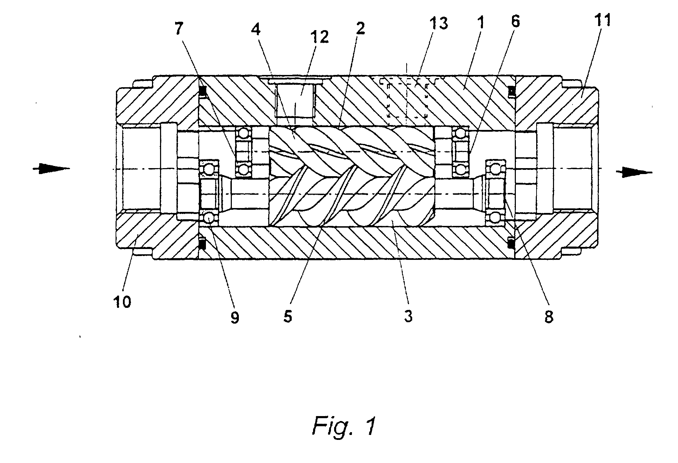

Fig. 1 zeigt eine bevorzugte Ausführungsform des mechanischen Teils der erfindungsgemäßen Vorrichtung zur Volumenmessung strömender Medien, insbesondere von Kraftstoff. Dieser mechanische Teil entspricht in seinem Grundaufbau weiterhin den bekannten Schraubenspindel-Volumetern, also beispielsweise dem aus der EP 0 572 621 B1 bekannten Volumeter. Zum besseren Verständnis der vorliegenden Erfindung werden die bekannten Merkmale dieses Aufbaus dennoch kurz erläutert.

In einem zylindrischen Gehäuse 1 mit zwei Längsbohrungen 2 und 3, die sie längsseitig teilweise durchdringen, sind in den beiden Längsbohrungen zwei mehrgängige Schraubenspindeln 4 und 5 jeweils mittels Kugellager 6, 7 bzw. 8, 9 drehbar gelagert. Das Gehäuse 1 wird zur einen Seite hin durch einen Anströmflansch 10 abgeschlossen, durch den hindurch der zu messende Kraftstoff in die Meßrichtung eintritt und wird zur anderen Seite durch einen Abströmflansch 11 abgeschlossen, durch den der gemessene Kraftstoff abströmt.

Um für die Volumenbestimmung die Umdrehungen zumindest einer der Schraubenspindeln erfassen zu können, ist weiterhin zumindest ein Sensor 12 vorgesehen. insoweit eine Erkennung der Strömungsrichtung erforderlich ist, können auch zwei oder mehr Sensoren 12, 13 vorgesehen sein, die zueinander phasenversetzt sind. Die Lage und Art der bevorzugt verwendeten Sensoren unterscheidet sich vom bisher bekannten Stand der Technik und stellt einen eigenständigen Aspekt der vorliegenden Erfindung dar. Die Anordnung und Art des vorzugsweise verwendeten Sensors bzw. der Sensoren wird weiter unten ausführlich beschrieben, nachdem im folgenden anhand eines Ausführungsbeispiels der Hauptaspekt der vorliegenden Erfindung, nämlich die Erzielung einer verbesserten Linearisierung, erläutert wurde.

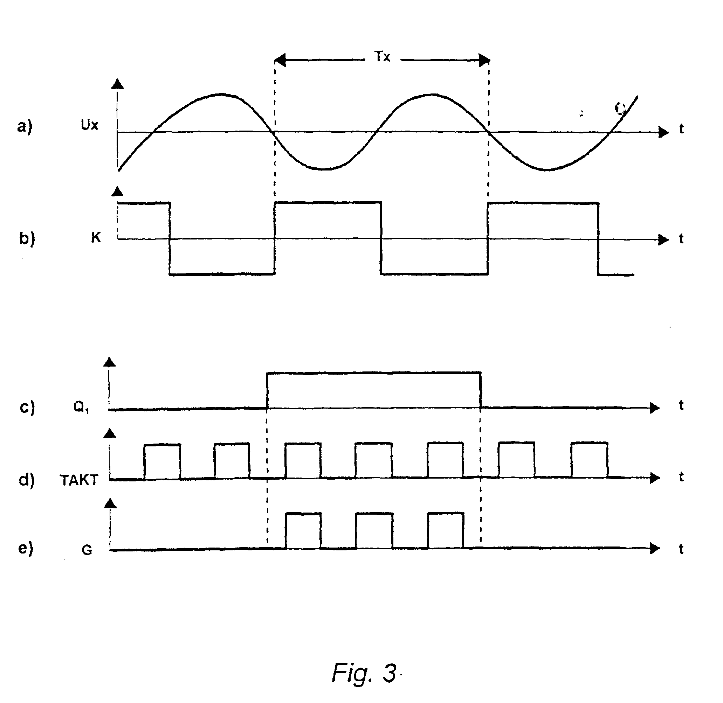

Wie erwähnt, erfolgt eine Volumenmessung durch Detektion der Spindelumdrehungen mittels eines Sensors. Der Sensor, der dabei die Funktion eines Drehzahlaufnehmers ausübt, kann beispielsweise aus einem induktiven Aufnehmer, einem optischen Sensor oder beispielsweise aus einem Hallsensor bestehen. Der verwendete Sensor wird eine in der Fig. 3a) schematisch dargestellte Meßspannung Uₓ erzeugen, die vorzugsweise beispielsweise mittels eines Schmitt-Triggers in eine Rechteckspannung umgesetzt wird, wie sie in Fig. 3b) gezeigt ist.

Im einfachsten Fall wird eine Sensorschaltung verwendet, die während einer vollen Umdrehung der Spindel einen Periodendurchlauf generiert, wie dies in den Fig. 3a) und 3b) durch Tₓ angedeutet ist. Für den Fall, daß eine Sensorschaltung verwendet wird, bei der während einer vollen Umdrehung der Spindel mehrere Spannungserhöhungen generiert werden, wird eine volle Spindelumdrehung durch eine entsprechende Vielzahl von Perioden Tₓ repräsentiert. In diesem Fall ist die Auflösung der Schaltung nicht auf volle Spindelumdrehungen begrenzt, sondern entsprechend verfeinert.

Zum besseren Verständnis sei im folgenden davon ausgegangen, daß die eingezeichnete Periodendauer Tₓ einer vollen Spindelumdrehung entspricht. Durch Zählen der in der Fig. 3b) gezeigten Rechtecke, beispielsweise durch Zählen der steigenden Flanken während eines Tankvorgangs, kann, wie oben bereits erwähnt, auf das getankte Volumen rückgeschlossen werden.

Ein Hauptaspekt der vorliegenden Erfindung baut auf der Erkenntnis auf, daß, basierend auf einem derartigen Zählprinzip, keine zufriedenstellende Linearisierung erreicht werden kann, um die Effekte, die in Zusammenhang mit Fig. 2 beschrieben wurden, zu kompensieren.

Gemäß einem Hauptaspekt der vorliegenden Erfindung werden daher die vom Sensor gelieferten Impulse nicht mehr gezählt und in ein entsprechendes Volumen umgerechnet, sondern es werden die Periodendauern zwischen den Impulsen gemessen. Die vom Sensor gelieferten Impulse, wie sie beispielhaft in der Fig. 3b) dargestellt sind, weisen während des Tankvorgangs unterschiedliche Periodendauern auf. Zu Beginn des Tankvorgangs, d.h. wenn geringe Strömungsgeschwindigkeiten herrschen, wird sich die Spindel langsam drehen, was zu langen Periodendauern Tₓ führt. Während des Tankvorgangs wird eine maximale Ströumungsgeschwindigkeit erreicht, die zu entsprechend verkürzten Periodendauern Tₓ führt. Zum Ende des Tankvorgangs werden sich die Periodendauern erneut entsprechend verlangsamen. Gemäß der Lehre der vorliegenden Erfindung wird vorgeschlagen, die Abbildung des Tankverhaltens in den Periodendauern zur fehlerkorrigierten Volumenbestimmung zu verwenden.

In den Figuren 3c) - e) ist die Periodendauermessung dadurch angedeutet, daß ein Zähltakt während eines Signals Q₁, durch das die Periodendauer erfaßt wird, erzeugt wird und die durch das Signal G illustrierte Pulszahl als Maß für die gemessene Periodendauer Tₓ verwendet wird.

Bezug nehmend auf die Fig. 2 wird ein Tankvorgang bei einem Durchsatz von 0 l/min beginnen, bis allmählich der maximale Durchsatz, beispielsweise beim Punkt III der Kurve K, erreicht ist. Zum Ende des Tankvorgangs wird der Durchsatz wieder bis auf 0 l/min abnehmen. Dieser Zu- und Abnahme des Durchsatzes entspricht eine Zu- und Abnahme der Winkelgeschwindigkeit der Spindel und somit eine Ab- und Zunahme der vom Sensor gelieferten Periodendauer Tₓ.

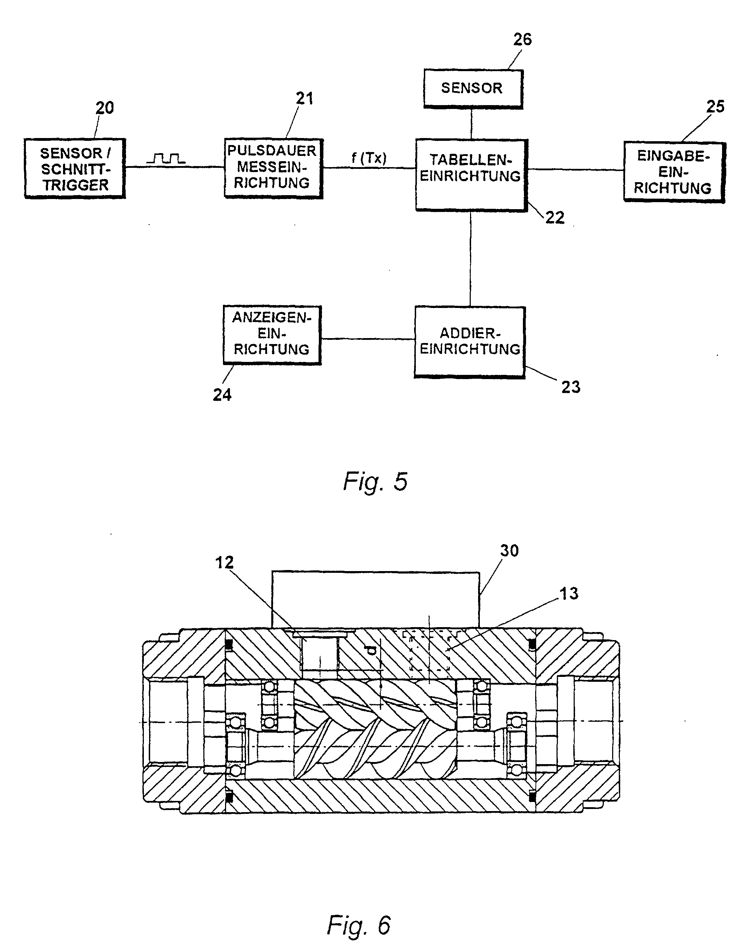

Fig. 4 verdeutlicht diesen Zusammenhang nochmals in schematischer Weise. Über die Abszisse nach links aufgetragen ist die Pulsdauer Tₓ, entlang der Ordinate ist das pro Puls durch das Volumeter strömende Volumen aufgetragen. Bei zusammenschauender Betrachtung mit der Fig. 2 ist zu erkennen, daß zu Beginn eines Tankvorgangs, d.h. wenn wenig Volumen pro Minute getankt wird, die Pulsdauer Tₓ groß ist und mit zunehmender Strömungsgeschwindigkeit entsprechend abnimmt. Das pro Puls gelieferte Volumen ist jedoch bei geringen Periodendauern, d.h. während sich die Spindel langsam dreht, wesentlich größer als im eingeschwungenen Zustand bei hohen Strömungsgeschwindigkeiten. Wie bereits weiter oben erwähnt, liegt dies u.a. daran, daß bei geringen Strömungsgeschwindigkeiten ein Teil des Gesamtvolumens an den Spindeln vorbeifließt und somit durch die Messung nicht erfaßt wird. Bei hohen Strömungsgeschwindigkeiten tritt dieser Effekt dagegen praktisch nicht mehr in Erscheinung, so daß die vom Sensor gelieferten Impulse ein nahezu exaktes Maß für das durch das Volumeter fließende Volumen darstellen. In der Fig. 4 ist dies anhand einer etwa gleichbleibenden getankten Menge pro Puls für kurze Periodendauern (z.B. T₁), d.h. für hohe Strömungsgeschwindigkeiten, angedeutet.

Durch Messung der Periodendauer Tₓ kann somit erkannt werden, welcher Punkt auf der in Fig. 4 gezeigten Kurve (z.B. T₁ - T₁₀) momentan vorliegt, und es kann somit erkannt werden, wieviel Kraftstoff in dieser Situation pro Puls tatsächlich durch das Volumeter strömt.

Technisch kann eine derartige Messung beispielsweise dadurch realisiert werden, daß über entsprechende Messungen eine Tabelle erstellt wird, in der ein Zusammenhang zwischen gemessenen Periodendauern Tₓ und den in den entsprechenden Situationen tatsächlich durch das Volumeter geflossenen Kraftstoffmengen festgehalten wird. Wird nun die Periodendauer ständig überwacht, so kann stets das zum momentanen Zeitpunkt richtige Volumen aus der Tabelle ausgelesen werden und zu bereits früher ausgelesenen Volumina hinzuaddiert werden. Damit erhält man zum Ende des Tankvorgangs ein akkumuliertes Gesamtvolumen, das aus Volumenteilen zusammengesetzt wurde, die entsprechend den sich verändernden Periodendauern Tₓ pro Puls unterschiedlich groß gewesen sein können.

Der ausgelesene Volumenwert kann dabei repräsentativ für die entsprechende Strömungsgeschwindigkeit sein und sich durch Multiplizieren mit der Periodendauer in einen absoluten Volumenwert umrechnen lassen.

Ein wesentlicher weiterer Vorteil der erfindungsgemäßen Lösung besteht darin, daß für unterschiedliche Situationen unterschiedliche derartige Tabellen bzw.
Tabellensätze verwendet werden können.

Beispielsweise wird eine zunehmende Viskosität des getankten Kraftstoffs, bzw. allgemein ausgedrückt, des durch das Volumeter strömenden Mediums zu einer Verringerung der Spaltverluste führen, was zu einer Verkleinerung des anhand der Fig. 2 erläuterten Meßfehlers führt. Für eine entsprechend erhöhte Viskosität wird daher vorzugsweise ein neuer Tabellensatz erstellt und in einer Situation mit erhöhter Viskosität entsprechend den gemessenen Pulsdauern ausgelesen. Entsprechendes gilt auch dann, wenn die Viskosität des Kraftstoffs zwar unverändert bleibt, sich jedoch die Temperatur ändert.

Allgemein ausgedrückt kann somit in Abhängigkeit der Art des gemessenen Mediums, der Viskosität, der Temperatur sowie nahezu beliebig anderer Einflußfaktoren jeweils ein speziell auf diese Situation abgestimmter Tabellensatz vorbereitet werden, der in der entsprechenden Situation dann, basierend auf den gemessenen Pulsdauern Tₓ, zeitrichtig ausgelesen wird, um dadurch ein akkumuliertes Gesamtvolumen zu erhalten. Anhand der Fig. 4 ist das Vorhandensein unterschiedlicher Tabellensätze dadurch graphisch angedeutet, so daß statt einer einzelnen Kurve eine gestrichelt angedeutete Kurvenschar vorhanden ist und jede einzelne Kurve einer bestimmten Meßsituation (Viskosität, Temperatur, Art des Mediums) entspricht.

Fig. 5 stellt ein schematisches Blockschaltbild einer Schaltung dar, mittels der die oben beschriebene Messung und Berechnung vorgenommen werden kann. Ein Sensor mit vorzugsweise integriertem Schmitt-Trigger 20 liefert einen Rechteckpuls entsprechend den detektierten Spindelumdrehungen an eine Pulsdauermeßeinrichtung 21. innerhalb der Pulsdauermeßeinrichtung 21 wird die Pulsdauer Tₓ bestimmt, wobei das entsprechende Ausgangssignal der Pulsdauermeßeinrichtung zur Adressierung einer Tabelleneinrichtung 22 verwendet wird. Der, basierend auf einer gemessenen Periodendauer Tₓ, aus der Tabelleneinrichtung 22 ausgelesene Wert stellt ein Maß für das bei der entsprechenden Pulsdauer pro Puls durch das Volumeter strömende Volumen dar und wird innerhalb einer Addiereinrichtung 23 zu den bereits davor ausgelesenen Volumina addiert, so daß sich nach Beendigung des gesamten Meßvorgangs ein Gesamtvolumen ergibt, das auf einer Anzeigeneinrichtung 24 angezeigt werden kann. Wie erwähnt, können in der Tabelleneinrichtung 22 für unterschiedliche Betriebsbedingungen unterschiedliche Tabellensätzen abgelegt sein. Zwischen den Tabellensätzen wird dann entsprechend den vorherrschenden Betriebsbedingungen umgeschaltet. Für unterschiedliche zu messende Medien können unterschiedliche Gruppen von Tabellensätzen abgelegt sein. Beispielsweise können eigene Tabellensätze für Benzin sowie für Diesel oder andere strömende Medien abgelegt sein. Für ein bestimmtes Medium können unterschiedliche Tabellensätze vorhanden sein entsprechend der speziellen Viskosität des Mediums, der vorherrschenden Temperatur etc. Vorzugsweise kann die Viskosität über eine Eingabeeinrichtung 25 eingestellt werden, wobei diese Einstellung in der Tabelleneinrichtung 22 bewirkt, daß ein entsprechend geeigneter Tabellensatz ausgewählt wird. Weiterhin ist vorzugsweise ein Temperaturfühler 26 vorgesehen, der während des Betriebs der Anlage ständig die Temperatur prüft und bei Temperaturänderung die Umschaltung auf einen für die neue Temperatur geeigneten Tabellensatz bewirkt.

Die in Fig. 5 als schematisches Blockschaltbild dargestellte Schaltung befindet sich vorzugsweise mit Ausnahme der Sensoren auf einer einzigen Platine.

Fig. 6 zeigt eine Lösungsmöglichkeit, bei der ein vergossenes Modul 30, in dem die wesentlichen Teile der Elektronik untergebracht sind, unmittelbar auf dem Gehäuse 1 des Volumeters angeordnet ist. Der Sensor 12 bzw. die Sensoren 12, 13 sind vorzugsweise unter dem Modul 30 angeordnet, so daß sich insgesamt ein kompakter Aufbau ergibt. Selbstverständlich wird der wesentliche Teil der in Fig. 5 gezeigten Schaltung vorzugsweise komplett von einem einzigen Mikrocontroller übernommen, der in das Modul 30 integriert wurde. Ebenso wie die Sensoren 12 bzw. 13 kann auch der in der Fig. 5 gezeigte Temperaturfühler an dem Gehäuse des Volumeters angebracht sein.

Anhand der Fig. 6 wird im folgenden ein weiteres eigenständiges erfinderisches Merkmal der vorliegenden Erfindung erläutert. Wie angedeutet, durchkreuzt die Bohrung, in der der Sensor 12 eingesetzt ist, nicht die Längsbohrungen für die Spindeln. Somit kommt der Sensor 12 nicht mit dem Naßraum in Verbindung, und eine Detektion der Spindelumdrehungen erfolgt durch die unter dem Sensor verbleibende Gehäuseschicht mit der Stärke d hindurch. Erfindungsgemäß wurde erkannt, daß insbesondere bei Verwendung eines Aluminiumgehäuses sowie eines Hallsensors eine Detektion der Spindeln durch eine bis zu 5 mm dicke Gehäuseschicht möglich ist. Zur Erzielung eines guten Meßeffekts ist in die Spindel an der entsprechenden Stelle ein Dauermagnet eingearbeitet, der im Sensor dann die gewünschte Signaländerung verursacht. Über den Spindelumlauf können und sollten vorzugsweise mehrere derartige Magneten eingearbeitet sein, um die Auflösung der Messung zu erhöhen.

Zur Erzielung einer besonders genauen Messung wird in erfindungsgemäßer Weise weiterhin vorgeschlagen, den Sensor über einem der in Fig. 1 gezeigten Kugellager anzuordnen, und zwar wiederum außerhalb des Naßraums, und die Kugeln des entsprechenden Kugellagers durch einen Sensor abzutasten. Die Auflösung der Messung ist dann proportional der Anzahl der in dem Kugellager mitrotierenden Kugeln.

Gemäß einer weiteren bevorzugten Ausführungsform der vorliegenden Erfindung weist das Volumeter weiterhin in der Nähe des Anströmflansches 10 sowie in der Nähe des Abströmflansches 11 jeweils einen Drucksensor auf, durch den die im Volumeter herrschende Druckdifferenz gemessen werden kann. Unter anderem ist anhand der detektierten Druckdifferenz eine Viskositätsbestimmung des das Volumeter durchströmenden Mediums möglich, wobei diese Meßgröße dazu verwendet werden kann, innerhalb der in der Fig. 5 gezeigten Tabelleneinrichtung 22 auf den zu der detektierten Viskosität korrespondierenden Tabellensatz umzuschalten. Alternativ kann statt der erwähnten zwei Drucksensoren auch ein einzelner Differenzdrucksensor verwendet werden.

## Patentansprüche

1. Vorrichtung zur Volumenmessung von Kraftstoff mit einem Gehäuse (1) mit mindestens zwei sich teilweise durchdringenden Längsbohrungen (2, 3) mit zueinander parallelen Achsen, in welchen vorzugsweise mehrgängige ineinandergreifende Schraubenspindeln frei drehbar gelagert sind und mindestens einer auf die Umdrehungen einer der Schraubenspindeln ansprechenden Sensoreinrichtung, die Pulse bereitstellt, deren zeitliche Aufeinanderfolge jeweils die momentane Winkelgeschwindigkeit der Spindel repräsentieren,
**gekennzeichnet durch**
eine Einrichtung (21) zum Messen von Abständen zwischen den von der Sensoreinrichtung gelieferten Pulsen,
eine Einrichtung zum Speichern (22) eines empirisch ermittelten Zusammenhangs zwischen Strömungsgeschwindigkeit des **durch** die Vorrichtung strömenden Kraftstoffs und einer **dadurch** in der Sensoreinrichtung bewirkten Pulserzeugung,
eine Einrichtung zum Bereitstellen (22) unterschiedlicher Volumenwerte, jeweils basierend auf dem von der Einrichtung zum Messen von Pulsabständen gemessenen Pulsabstandes sowie basierend auf dem in der Einrichtung zum Speichern gespeicherten Zusammenhang zwischen Strömungsgeschwindigkeit und Pulserzeugung, wobei der bereitgestellte Volumenwert ein Maß für das zwischen aufeinanderfolgenden Pulsen **durch** die Vorrichtung strömenden Volumens ist, und
eine Einrichtung zum Addieren (23) der von der Einrichtung zum Bereitstellen sukzessive bereitgestellten Werte, um einen für die Volumenmessung maßgebenden Gesamtvolumenwert zu erzeugen.

2. Vorrichtung nach Anspruch 1, **dadurch gekennzeichnet, daß** die Einrichtung zum Speichern (22) sowie die Einrichtung zum Bereitstellen (22) durch eine Tabelleneinrichtung gebildet wird, wobei die unterschiedlichen elementaren Volumenwerte an vorgegebenen Adressen gespeichert sind und gemäß dem jeweils gemessenen Pulsabstand adressiert und ausgelesen werden, so daß der genannte empirisch ermittelte Zusammenhang durch die vorgenommene Zuweisung zwischen gemessenem Pulsabstand und Volumenwert repräsentiert wird.

3. Vorrichtung zur Volumenmessung nach Anspruch 2, **dadurch gekennzeichnet, daß** die Tabelleneinrichtung durch ein entsprechend programmiertes ROM realisiert ist.

4. Vorrichtung nach einem der Ansprüche 1 bis 3, **dadurch gekennzeichnet, daß** zumindest die Einrichtung zum Addieren mittels eines Mikroprozessors realisiert ist.

5. Vorrichtung nach einem der vorhergehenden Ansprüche, **dadurch gekennzeichnet, daß** weiterhin eine Anzeigeneinrichtung (24) zum Anzeigen eines Meßwerts vorgesehen ist, der entweder dem erzeugten Gesamtvolumenwert oder einem dazu proportionalen Wert entspricht.

6. Vorrichtung nach Anspruch 2, **dadurch gekennzeichnet, daß** in der Tabelleneinrichtung unterschiedliche Tabellensätze gespeichert sind, die jeweils auf ein bestimmtes strömendes Medium sowie bei der Messung vorherrschende Betriebsbedingungen optimiert sind und eine Einrichtung vorgesehen ist, durch die der jeweils geeignete Tabellensatz für die Messung ausgewählt wird.

7. Vorrichtung nach Anspruch 6, **dadurch gekennzeichnet, daß** Tabellensätze für zumindest unterschiedliche Temperatur und/oder unterschiedliche Viskositäten vorhanden sind.

8. Vorrichtung nach Anspruch 6, **dadurch gekennzeichnet, daß** Tabellensätze für unterschiedliche Arten von Kraftstoff vorhanden sind.

9. Vorrichtung nach einem der vorhergehenden Ansprüche, **dadurch gekennzeichnet, daß** ein Temperatursensor (26) vorgesehen ist, der die während des Tankvorgangs herrschende Temperatur erfaßt.

10. Vorrichtung nach einem der vorhergehenden Ansprüche,
**dadurch gekennzeichnet, daß** zwei Drucksensoren vorgesehen sind, durch die der in der Vorrichtung auftretende Differenzdruck gemessen wird und weiterhin eine Einrichtung vorgesehen ist, durch die anhand des gemessenen Differenzdrucks die Viskosität des strömenden Mediums bestimmt wird.

11. Vorrichtung nach einem der vorhergehenden Ansprüche, **dadurch gekennzeichnet, daß** eine Eingabeeinrichtung (26) vorgesehen ist zum Eingeben von für die Messung maßgebenden Betriebsparametern.

12. Vorrichtung nach einem der vorhergehenden Ansprüche, **dadurch gekennzeichnet, daß** die Sensoreinrichtung mindestens einen Hallsensor (12) aufweist, der so angeordnet ist, daß er mit dem strömenden Medium nicht in Kontakt kommt und die Spindelumdrehung durch das Gehäusematerial hindurch detektiert.

13. Vorrichtung nach einem der vorhergehenden Ansprüche, **dadurch gekennzeichnet, daß** die Sensoreinrichtung die Spindelumdrehung anhand der Bewegung der Kugeln in einem der die Spindeln lagernden Kugellager detektiert.

14. Vorrichtung nach Anspruch 13, **dadurch gekennzeichnet, daß** die Sensoreinrichtung einen Hallsensor aufweist und die Kugeln des entsprechenden Kugellagers magnetisiert sind.

15. Verfahren zur Volumenmessung von Kraftstoff, mittels eines Schraubenspindel-Volumeters, wobei das Verfahren folgende Schritte aufweist:
Detektieren der Umdrehungen einer Schraubenspindel mittels eines Sensors und Erzeugen von Impulsen, deren zeitliche Aufeinanderfolge repräsentativ für die Winkelgeschwindigkeit der Schraubenspindel ist,
wiederholtes Messen der Zeitdauer zwischen aufeinanderfolgenden Pulsen,
in Abhängigkeit der jeweils gemessenen Zeitdauer, Auswählen eines für die entsprechende Zeitdauer vorbestimmten Volumenwertes, wobei der Volumenwert repräsentativ für das bei der entsprechenden Winkelgeschwindigkeit der Spindel pro festgelegtem Umdrehungswinkel der Spindel durch das Volumeter strömende Volumen ist,
Addieren der nacheinander für unterschiedliche Zeitdauermessungen ausgewählten Volumenwerte, und
Erstellen und vorzugsweise Anzeigen eines Gesamtvolumenwertes, basierend auf der sich während der gesamten Volumenmessung durch fortlaufendes Addieren der Volumenwerte ergebenden Summe.

16. Verfahren nach Anspruch 15, **dadurch gekennzeichnet, daß** die ausgewählten Volumenwerte jeweils repräsentativ für das bei der entsprechenden Winkelgeschwindigkeit der Schraubenspindel pro Gesamtumdrehung der Schraubenspindel durch das Volumeter fließende Volumen sind.

17. Verfahren nach Anspruch 15 oder 16, **dadurch gekennzeichnet, daß** die durch Addieren erhaltene Summe aus den ausgewählten Volumenwerten unmittelbar als Ergebnis der Volumenmessung angezeigt wird.

18. Verfahren nach Anspruch 15, **dadurch gekennzeichnet, daß** pro voller Spindelumdrehung mehrere Impulse von dem Sensor erzeugt werden.

19. Verfahren nach einem der Ansprüche 15 bis 18, **dadurch gekennzeichnet, daß** ein Hallsensor verwendet wird, mittels dem die Spindelumdrehung durch eine Gehäusewand des Volumeters hindurch detektiert wird.

## Claims

1. Apparatus for volumetric measurement of fuel with a casing (1) with at least two partly interpenetrating longitudinal bores (2, 3) with parallel axes in which preferably multiple-start helical spindles meshing with each other are freely rotatably mounted and at least one sensing facility responsive to the revolutions of one of the helical spindles and supplying pulses whose sequence over time represents the instantaneous angular velocity of the spindle, **characterized by**
means (21) for measuring intervals between the pulses supplied by the sensing facility,
means for storing (22) an empirically determined relation between the rate of fuel flow through the apparatus and a pulse generation thereby instigated in the sensing facility,
means for supplying (22) different volume-values in each case on the basis of the pulse interval measured by the means for measuring pulse intervals and on the basis of the relation between rate of flow and pulse generation stored in the storage means, the volume-value supplied being a measure of the volume flowing through the apparatus between successive pulses, and
means for summing (23) the values successively supplied by the supply means to produce a total volume-value representing the volumetric measurement.

2. Apparatus according to claim 1, **characterized in that** the storage means (22) and the supply means (22) are constituted by a tabulator means, the different elementary volume-values being stored at specified addresses and addressed and read out according to each measured pulse interval so that the said empirically determined relation is represented by the assignment made between measured pulse interval and volume-value.

3. Apparatus for volumetric measurement according to Claim 2, **characterized in that** the tabulator means is realized by a suitably programmed ROM.

4. Apparatus according to any one of Claims 1 to 3, **characterized in that** at least the means for summing is realized by means of a microprocessor.

5. Apparatus according to any one of the preceding claims, **characterized in that** a display device (24) is also provided to display a measured value which corresponds either to the total volume-value produced or to a value proportional thereto.

6. Apparatus according to claim 2, **characterized in that** different tables each optimized for a specific flowing medium and operating conditions prevailing during the measurement are stored in the tabulator means, and a means is provided for selecting the individual table appropriate to the measurement.

7. Apparatus according to claim 6, **characterized in that** tables are available for at least different temperature and/or different viscosities.

8. Apparatus according to Claim 6, **characterized in that** tables are available for different kinds of fuel.

9. Apparatus according to any one of the preceding claims, **characterized in that** a temperature sensor (26) is provided which detects the temperature prevailing during the filling operation.

10. Apparatus according to anyone of the preceding claims, **characterized in that** two pressure sensors are provided which measure the differential pressure occurring in the apparatus, and a device is also provided which determines the viscosity of the flowing medium from the differential pressure reading.

11. Apparatus according to any one of the preceding claims, **characterized in that** an input device (25) is provided for input of operating parameters governing the measurement.

12. Apparatus according to any one of the preceding claims, **characterized in that** the sensing means has at least one Hall probe (12) which is arranged so that it does not come into contact with the flowing medium and detects the rotation of the spindles through the casing material.

13. Apparatus according to any one of the preceding claims, **characterized in that** the sensing means detects the rotation of the spindles as revealed by the motion of the balls in one of the ball bearings in which the spindles are mounted.

14. Apparatus according to Claim 13, **characterized in that** the sensing means has a Hall probe and the balls of the ball bearing concerned are magnetized.

15. Method for volumetric measurement of fuel by means of a helical spindle volumeter, the method comprising the following steps:
detection of the revolutions of a helical spindle by means of a sensor and generation of pulses whose succession over time is representative of the angular velocity of the helical spindle,
repeated measurement of the time interval between successive pulses,
selection, as a function of each measured time interval, of a predetermined volume-value for the time interval concerned, the volume-value being representative of the volume flowing through the volumeter for every defined angle of rotation of the spindle at the corresponding angular velocity of the spindle,
summing of the volume-values successively selected for different time-interval measurements, and
generation and preferably display of a total volume-value based on the total yielded by continuous summing of volume-values throughout the volumetric measurement.

16. Method according to claim 15, **characterized in that** the selected volume-values are each representative of the volume flowing through the volumeter for every full revolution of the helical spindle at the corresponding angular velocity of the helical spindle.

17. Method according to claim 15 or claim 16, **characterized in that** the total obtained by summing the selected volume-values is directly displayed as the result of the volumetric measurement.

18. Method according to Claim 15, **characterized in that** a plurality of pulses are generated by the sensor for every full revolution of the spindle.

19. Method according to any one of Claims 15 to 18, **characterized in that** a Hall probe is used to detect the spindle rotation through a casing wall of the volumeter.

## Revendications

1. Dispositif destiné à mesurer un volume de carburant, comprenant un boîtier (1) qui comporte au moins deux forures longitudinales (2, 3), passant partiellement l'une à travers l'autre et avec des axes parallèles, dans lesquelles sont logées de manière à pouvoir tourner librement des tiges filetées, de préférence à filets multiples, engrenant les unes dans les autres, et au moins une unité de capteurs activée. par les rotations de l'une des tiges filetées, qui émet des impulsions dont la succession chronologique représente respectivement la vitesse angulaire momentanée de la tige filetée, **caractérisé par**
- une unité (21) destinée à mesurer les intervalles de temps entre les impulsions émises par l'unité de capteurs,
- une unité (22) destinée à mémoriser un rapport, déterminé empiriquement, entre la vitesse d'écoulement du carburant affluant à travers le dispositif et une émission d'impulsions qui en résulte dans l'unité de capteurs,
- une unité (22) destinée à préparer différentes valeurs de volume, basées chacune sur l'intervalle de temps entre les impulsions mesurées par l'unité de mesure des intervalles de temps entre les impulsions, ainsi que sur le rapport, stocké dans l'unité de mémorisation, entre la vitesse d'écoulement et l'émission des impulsions, la valeur du volume préparée étant une référence pour le volume affluant à travers le dispositif entre des impulsions successives, et
- une unité (23) destinée à additionner les valeurs préparées successivement par l'unité de préparation, afin de générer une valeur de volume global déterminante pour la mesure du volume.

2. Dispositif selon la revendication 1, **caractérisé en ce que** l'unité (22) destinée à mémoriser, ainsi que l'unité (22) destinée à préparer différentes valeurs de volume sont formées par une unité de classement, les différentes valeurs élémentaires du volume étant mémorisées dans des adresses prédéfinies et étant adressées selon la distance mesurée entre deux impulsions, de telle sorte que le rapport, déterminé empiriquement, est représenté par l'affectation appliquée entre l'intervalle de temps mesuré entre deux impulsions et la valeur du volume.

3. Dispositif destiné à mesurer un volume selon la revendication 2, **caractérisé en ce que** l'unité de classement est réalisée par une mémoire ROM programmée de manière correspondante.

4. Dispositif selon l'une quelconque des revendications 1 à 3, **caractérisé en ce qu'**au moins l'unité destinée à additionner les valeurs est réalisée au moyen d'un microprocesseur.

5. Dispositif selon l'une des revendications précédentes, **caractérisé en ce qu'**il est prévu, en outre, une unité d'affichage (24) destinée à afficher une valeur de mesure, qui correspond soit à la valeur de volume global calculée, soit à une valeur proportionnelle à celle-ci.

6. Dispositif selon la revendication 2, **caractérisé en ce que** différents enregistrements de tables sont mémorisés dans l'unité de classement, lesquels sont optimisés respectivement en fonction d'un milieu d'écoulement déterminé, ainsi qu'en fonction des conditions d'exploitation prédominantes pendant la mesure, et il est prévu une unité permettant de sélectionner pour la mesure l'enregistrement de tables approprié dans chaque cas.

7. Dispositif selon la revendication 6, **caractérisé en ce que** des enregistrements de tables sont disponibles pour au moins des températures différentes et/ou des viscosités différentes.

8. Dispositif selon la revendication 6, **caractérisé en ce que** des enregistrements de tables sont disponibles pour différents types de carburant.

9. Dispositif selon l'une des revendications précédentes, **caractérisé en ce qu'**il est prévu un capteur de température (26), qui enregistre la température qui règne pendant le processus de pompage du carburant.

10. Dispositif selon l'une des revendications précédentes, **caractérisé en ce qu'**il est prévu deux capteurs de pression, permettant de mesurer la pression différentielle qui est générée dans le dispositif, et **en ce qu'**il est également prévu, une unité destinée à déterminer, à partir de la pression différentielle mesurée, la viscosité du milieu affluant à travers le dispositif.

11. Dispositif selon l'une des revendications précédentes, **caractérisé en ce qu'**il est prévu un dispositif de saisie (26) permettant de saisir les paramètres d'exploitation déterminants pour la mesure.

12. Dispositif selon l'une des revendications précédentes, **caractérisé en ce que** l'unité de capteurs comporte au moins un capteur de Hall (12), qui est disposé de manière à ne pas entrer en contact avec le milieu affluant à travers le dispositif et de manière à détecter à travers le matériau du boîtier la rotation des tiges filetées.

13. Dispositif selon l'une des revendications précédentes, **caractérisé en ce que** l'unité de capteurs détecte la rotation des tiges filetées à partir du mouvement des billes dans un palier à roulement à billes, dans lequel sont montées les tiges filetées.

14. Dispositif selon la revendication 13,
**caractérisé en ce que** l'unité de capteurs comporte un capteur de Hall et les billes du roulement à billes correspondant sont aimantées.

15. Procédé destiné à mesurer un volume de carburant au moyen d'un compteur volumétrique à tiges filetées, le procédé comprenant les étapes suivantes :
- détection des rotations d'une tige filetée au moyen d'un capteur et émission d'impulsions dont la succession chronologique est représentative de la vitesse angulaire de la tige filetée,
- mesure répétée de l'intervalle de temps entre deux impulsions successives,
- en fonction de l'intervalle de temps mesuré dans chaque cas, sélection d'une valeur du volume prédéfinie pour l'intervalle de temps correspondant, la valeur du volume étant représentative du volume affluant à travers le compteur volumétrique en présence de la vitesse angulaire correspondante de la tige filetée pour chaque angle de rotation défini de la tige,
- addition des valeurs du volume sélectionnées l'une après l'autre pour différentes mesures de l'intervalle de temps, et
- calcul et, de préférence, affichage d'une valeur du volume global basée sur la somme obtenue par l'addition continue des valeurs du volume pendant la mesure de volume global.

16. Procédé selon la revendication 15, **caractérisé en ce que** les valeurs du volume sélectionnées sont chacune représentatives du volume affluant à travers le compteur volumétrique en présence de la vitesse angulaire correspondante de la tige filetée pour chaque rotation totale de la tige filetée.

17. Procédé selon la revendication 15 ou 16, **caractérisé en ce que** la somme obtenue par l'addition des valeurs du volume sélectionnées est affichée directement comme le résultat de la mesure du volume.

18. Procédé selon la revendication 15, **caractérisé en ce que** le capteur génère plusieurs impulsions à chaque rotation complète de la tige filetée.

19. Procédé selon l'une quelconque des revendications 15 à 18, **caractérisé en ce que** l'on utilise un capteur de Hall permettant de détecter à travers la paroi du boîtier du compteur volumétrique la rotation de la tige filetée.
